(19) Europäisches Patentamt
European Patent Office
Office européen des brevets

(11) **EP 4 576 610 A1**

(12) **EUROPEAN PATENT APPLICATION**

(43) Date of publication:
**25.06.2025 Bulletin 2025/26**

(51) International Patent Classification (IPC):
**H04B 10/70** $^{(2013.01)}$

(21) Application number: **23217711.3**

(52) Cooperative Patent Classification (CPC):
**H04B 10/70**

(22) Date of filing: **18.12.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ID Quantique S.A.**
**1227 Genève (CH)**

(72) Inventors:
• **BOSO, Gianluca**
**1213 Petit-Lancy (CH)**
• **STUCKI, Damien**
**1227 Carouge (CH)**

(74) Representative: **KATZAROV S.A.**
**Geneva Business Center**
**12 Avenue des Morgines**
**1213 Petit-Lancy (CH)**

(54) **QUANTUM CHANNEL MONITORING SYSTEM AND METHOD**

(57) The present invention relates to a quantum key distribution system (100) comprising an emitter (1) and a receiver (2) adapted to communicate through a quantum channel (3), and a channel monitoring means (11, 22, 23) adapted to measure a transmission attenuation value between said emitter (1) and said receiver (3), characterized in that said channel monitoring means (11, 22, 23) includes an optical source (11) adapted to generate an optical signal ($S_A$), an optical signal detector (22) adapted to detect said optical signal (Sz) sent by the optical source (11) and a processing unit (23) adapted to determine an transmission attenuation value between the emitter (1) and the receiver (2).

**Figure 1**

EP 4 576 610 A1

## Description

### Technical field

The present invention relates to a method and a device for quantum channel monitoring and more particularly to a method and a device for signal attenuation measurement.

### Background of the invention

Quantum cryptography or quantum key distribution, in the following also referred to as QKD, is a method allowing the distribution of a secret key between two distant parties, the emitter, also known as Alice, and the receiver, also known as Bob, with a provable absolute security. Quantum key distribution relies on quantum physics principles and encoding information in quantum states, or qubits, as opposed to classical communication's use of bits. Usually, photons are used for these quantum states. Quantum key distribution exploits certain properties of these quantum states to ensure its security.

More particularly, the security of this method comes from the fact that the measurement of a quantum state of an unknown quantum system modifies the system itself. In other words, a spy eavesdropping on a quantum communication channel cannot get information on the key without introducing errors in the key exchanged between the emitter and the receiver thereby informing the user of an eavesdropping attempt.

The encryption devices enable secure transmission of useful payload by performing some kind of symmetric encryption using the keys exchanged by quantum key distribution. Specific quantum key distribution systems are described for instance in US 5,307,410, and in the article by C. H. Bennett entitled "Quantum cryptography using any two non-orthogonal states", Phys. Rev. Lett. 68, 3121 (1992).

During operation of QKD, the losses in the optical link between Alice and Bob must be measured in order to make sure that the link is compatible with the maximum loss tolerated by the system, normally in the range of 24 dB nowadays, and monitor eventual link variations that might occur during operation and affect the proper functioning of the system.

For the reasons above, a user is usually asked to measure the loss budget of his link before installing the QKD system. However, in general, he doesn't know how to measure an optical link loss before installing a QKD system.

A common prior art solution is to let the support team of the QKD operator to perform such task using an OTDR instrument. However, care must be taken to avoid adding losses to the measured link, e.g. by adding a faulty connection or a cable between the measured link and either Alice's or Bob's quantum channel connectors.

By using this solution, if the losses vary after the installation, the system cannot clearly identify the problem and it will just reset. It's up to the QKD support team to identify by troubleshooting the system - an extremely time consuming procedure - and eventually remeasure the losses with an external OTDR instrument, which however has the limitation mentioned above.

Therefore, there is a need to avoid having an external operator to verify the link loss during the installation of a QKD system and provide a solution permitting the user to check the link loss himself.

In addition, there is a need for continuous monitoring of the link loss during key exchange with the possibility to raise an alarm if the loss increases to outside the operating conditions.

An object of the present invention is therefore to provide a method and a device with quantum channel link quality monitoring capacity.

### Summary of the invention

The general principle of the present invention is based on the general approach that the link loss is measured through the QKD system itself.

More particularly, it considers that the equipment of the emitter (Alice) and the receiver (Bob) of the QKD, i.e. the laser at the emitter's side and the detectors at the receiver's side can be used to respectively (i) generate a calibrated optical signal at the emitter's side, (ii) send it to the receiver and (iii) measure it at the receiver's side in order to deduce the attenuation of the line.

A first aspect of the invention therefore relates to a quantum key distribution system comprising an emitter and a receiver adapted to communicate through a quantum channel, and a channel monitoring module adapted to measure a transmission attenuation value between the emitter and the receiver, characterized in that the channel monitoring module includes an optical source adapted to generate an optical signal, an optical signal detector adapted to detect the optical signal sent by the optical source and a processing unit adapted to determine an transmission attenuation value between the emitter and the receiver.

Advantageously, the optical source is embedded within the emitter and the detector is embedded within the receiver.

In a preferred manner, the transmission attenuation value represents a photon loss between the optical signal sent by emitter and the optical signal detected by the receiver.

Advantageously, the photon loss is determined by carrying out the following calculation: Channel

$$\text{Channel Loss[dB]} = 10\log\left(\frac{N_A}{N_Z}\right) - \text{IL}_{\text{Bob}}\text{[dB]}$$

where $N_A$ is the number of photons per second sent by the optical source, Nz is the number of detections at the detector and $\text{IL}_{\text{Bob}}$ is a parameter relating on both the intrinsic optical losses at the receiver and the calibrated detection efficiency.

Advantageously, the detector is a single-photon detector.

In a preferred manner, the processing unit comprises a correction module adapted to correct the measured number of detections Nz at the detector according to a dead-time associated with the detector.

Preferably, the Nz quantity is corrected according to the following equation, which takes into account the above-mentioned dead-time but which does not take into consideration the dark counts which are negligible :

$$N'_Z = \frac{N_Z}{1 - N_Z \times deadtime}$$

Advantageously, it further comprises a buffer adapted to store the determined attenuation value.

Preferably, the processing unit comprises a comparison module adapted to compare the stored determined attenuation value with a new determined attenuation value and is adapted to inform a user when the determined attenuation values are different from each other by at least a predetermined value.

A second aspect of the invention relates to a quantum key distribution method comprising the steps of sending an optical pulse signal characterized by $N_A$ at the emitter, detecting the optical pulse signal characterized by Nz at the receiver, measuring an attenuation value of the optical signal between the emitter and the receiver.

Advantageously, the attenuation value of is determined by carrying out the following calculation: Channel

$$\text{Channel Loss[dB]} = 10\log\left(\frac{N_A}{N_Z}\right) - \text{IL}_{\text{Bob}}\text{[dB]}$$

where $N_A$ is the number of photons per second sent by the optical source, Nz is the number of detections at the detector and $\text{IL}_{\text{Bob}}$ is a parameter relating on both the intrinsic optical losses at the receiver and the calibrated detection efficiency.

### Brief description of the drawings

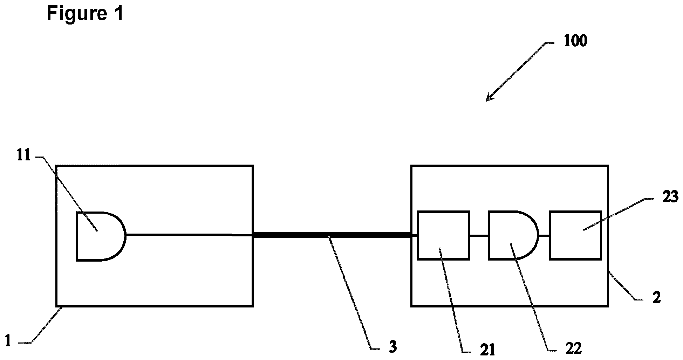

The invention will be described with reference to the drawings, in which the same reference numerals indicate the same feature. In particular, Figure 1 represents a QKD system according to the present invention.

### Detailed Description

The invention will be described, for better understanding, with reference to a specific embodiment. It will however be understood that the invention is not limited to the embodiment herein described but is rather defined by the claims and encompasses all embodiments which are within the scope of the claims.

The general principle of the invention can be summarized in that it consists of using the hardware present inside a QKD system to estimate the link loss between an emitter, Alice, and a receiver, Bob.

The embodiment of the present invention is shown in Figure 1 which represents a QKD system 100 according to the present invention.

The QKD system 100 comprises an emitter 1, a receiver 2, a quantum channel 3 and a channel monitoring means 11, 22, 23.

The channel monitoring means 11, 22, 23 comprises an optical source 11 at the emitter's side, adapted to generate an optical signal S, an optical signal detector 22 at the receiver side, adapted to detect the optical signal sent by the optical source 11 and a processing unit 23 adapted to determine a signal attenuation value.

The optical source can be a laser, for example.

Figure 1 schematically shows the processing unit 23 in the receiver 2, however this is due for clarity reasons only. The calculation, and therefore the processing unit 23, can be done anywhere including remotely or on the receiver side. Also, optics 21 are schematically represented in figure 1 for clarity reasons as well.

More particularly, in order to achieve the invention, it is assumed that the output number of photons from the emitter 1 Alice is calibrated, which is a condition needed for the normal QKD operation, and the photon detection efficiency of the detector 22 and internal optical losses of Bob 21 are known since they are calibrated at manufacturing.

By knowing these two quantities, it is easy to estimate the channel loss as simply:

$$\text{Channel Loss[dB]} = 10\log\left(\frac{N_A}{N_Z}\right) - \text{IL}_{\text{Bob}}[\text{dB}]$$

Where $N_A$ is the number of photons per second sent by Alice 1 with the optical signal $S_A$ and $N_Z$ is the number of detections at a Z-basis detector 22 at Bob's side. $\text{IL}_{\text{Bob}}$ includes both the intrinsic optical losses at Bob and the calibrated detection efficiency inherent to its embedded optics 21.

However, due to the non-ideal behavior of a typical single-photon detector 22, more specifically, given the dead-time associated with the single-photon detector, the Nz quantity is preferably corrected according to the following equation to obtain a more accurate value:

$$N'_Z = \frac{N_Z}{1 - N_Z \times deadtime}$$

Therefore, in a QKD apparatus 100 as shown in the figure 1, the optical source 11 at Alice's side is adapted to send an optical pulse signal $S_A$ to Bob 2, where the signal is characterized by $N_A$, and Bob's optics 21 and detector 22 are used to measure such signal so as to measure Nz and a processing unit 23 is controlled to measure the attenuation by using the detected parameters $N_A$ and $N_Z$ in the above equation.

According to a particularly preferred option, the determined attenuation value can be stored in a buffer and as soon as an attenuation measurement provides an attenuation value different from the value stored in the buffer, an alarm is sent to the operator.

**Claims**

1.  Quantum key distribution system (100) comprising

    an emitter (1) and a receiver (2) adapted to communicate through a quantum channel (3), and a channel monitoring means (11, 22, 23) adapted to measure a transmission attenuation value between said emitter (1) and said receiver (2),
    **characterized in that** said channel monitoring means (11, 22, 23) includes an optical source (11) adapted to generate an optical signal ($S_A$), an optical signal detector (22) adapted to detect said optical signal ($S_Z$) sent by said optical source (11) and a processing unit (23) adapted to determine a transmission attenuation value between said emitter (1) and said receiver (2).

2.  Quantum key distribution system according to claim 1, **characterized in that** said optical source (11) is embedded within said emitter (1) and said detector (22) is embedded within said receiver (2).

3.  Quantum key distribution system according to claim 1 or 2, **characterized in that** said transmission attenuation value represents a photon loss between said optical signal ($S_A$) sent by emitter (1) and said optical signal ($S_Z$) detected by said receiver (2).

4.  Quantum key distribution system according to claim 3, **characterized in that** said photon loss is determined by carrying out said following calculation:

$$\text{Channel Loss[dB]} = 10\log\left(\frac{N_A}{N_Z}\right) - \text{IL}_{\text{Bob}}[\text{dB}]$$

    Where $N_A$ is the number of photons per second sent by the optical source (11), $N_Z$ is the number of detections at said detector (22) and $\text{IL}_{\text{Bob}}$ is a parameter relating to optics (21) of the receiver (2) including both the intrinsic optical losses at the receiver and the calibrated detection efficiency.

5.  Quantum key distribution system according to any one of claims 1 to 4, **characterized in that** said detector (22) is a single-photon detector.

6.  Quantum key distribution system according to claim 5, **characterized in that** said processing unit (23) comprises a correction module adapted to correct the measured number of detections Nz at said detector (2) according to a dead-time associated with said detector (2).

7. Quantum key distribution system according to claim 6, **characterized in that** said Nz quantity is corrected according to the following equation:

$$N'_Z = \frac{N_Z}{1 - N_Z \times deadtime}$$

8. Quantum key distribution system according to claim 1 to 7, **characterized in that** it further comprises a buffer adapted to store said determined attenuation value.

9. Quantum key distribution system according to claim 8, **characterized in that** said processing unit (23) comprises a comparison module adapted to compare the stored determined attenuation value with a new determined attenuation value and is adapted to inform a user when said determined attenuation values are different from each other by at least a predetermined value.

10. Quantum key distribution method comprising the steps of sending an optical pulse signal ($S_A$) **characterized by** $N_A$ at the emitter (1), detecting said optical pulse signal ($S_Z$) **characterized by** $N_Z$ at the receiver (2), measuring an attenuation value of said optical signal ($S_A$, $S_Z$) between the emitter (1) and the receiver (2).

11. Quantum key distribution method according to claim 10, **characterized in that** the attenuation value of is determined by carrying out the following calculation:

$$\text{Channel Loss[dB]} = 10\log\left(\frac{N_A}{N_Z}\right) - \text{IL}_{\text{Bob}}[\text{dB}]$$

Where $N_A$ is the number of photons per second sent by the optical source (11), $N_Z$ is the number of detections at said detector (21) and $\text{IL}_{\text{Bob}}$ is a parameter relating to optics (21) of the receiver (2) including both the intrinsic optical losses at the receiver (2) and the calibrated detection efficiency.

Figure 1

Europäisches
Patentamt

European
Patent Office

Office européen
des brevets

# EUROPEAN SEARCH REPORT

Application Number

EP 23 21 7711

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 590 105 B1 (KOREA ADVANCED INST SCI & TECH [KR]) 1 February 2016 (2016-02-01) * figures 1,2 * * paragraphs [0039], [0042], [0053] * | 1-3,5-10 | INV. H04B10/70 |
| X | CN 217 307 693 U (NANJING KEXIN QUANTUM TECH CO LTD) 26 August 2022 (2022-08-26) * figures 1-3 * * paragraphs [0004], [0005], [0034], [0042] * | 1-11 | |
| X | GUANGQUAN WANG CHINA UNICOM P R CHINA: "Proposed text for D2.4: Fiber loss monitoring method in the QKD network;QIT4N-I-100", ITU-T DRAFT; STUDY PERIOD 2017-2020; FOCUS GROUP QIT4N; SERIES QIT4N-I-100, INTERNATIONAL TELECOMMUNICATION UNION, GENEVA ; CH , vol. qit4n 29 April 2020 (2020-04-29), pages 1-3, XP044295686, Retrieved from the Internet: URL:https://extranet.itu.int/sites/itu-t/f ocusgroups/qit4n/input/QIT4N-I-100.docx [retrieved on 2020-04-29] * pages 2,3 * | 1-3,5-10 | |

| | |
|---|---|
| | TECHNICAL FIELDS SEARCHED (IPC) |
| | H04B |

The present search report has been drawn up for all claims

| Place of search | Date of completion of the search | Examiner |
|---|---|---|
| Munich | 28 May 2024 | Petitit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 7711

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2024

| Patent document cited in search report | Publication date | Patent family member(s) | Publication date |
|---|---|---|---|
| KR 101590105 B1 | 01-02-2016 | NONE | |
| CN 217307693 U | 26-08-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5307410 A

**Non-patent literature cited in the description**

- **C. H. BENNETT**. Quantum cryptography using any two non-orthogonal states. *Phys. Rev. Lett.*, 1992, vol. 68, 3121